# EUROPEAN PATENT SPECIFICATION

(11) **EP 1 564 745 B1**
(45) Date of publication and mention of the grant of the patent: **23.04.2008**
(21) Application number: 05250861.1
(22) Date of filing: 15.02.2005
(51) Int. Cl.: G11B 33/00

(54) **Disk device having clamper on board**
Plattengerät mit integrierter Spannvorrichtung
Dispositif de disque avec un dispositif de serrage à bord

(30) Priority: 17.02.2004 JP 2004039874
(43) Date of publication of application: 17.08.2005
(73) Proprietor: ORION ELECTRIC CO., Ltd., Takefu-City, Fukui 915-8555 (JP)
(72) Inventor: Nishide, Masahiko c/o Orion Electric Co., Ltd., Takefu-city Fukui 915-8555 (JP); Tsunemoto, Kinichi c/o Orion Electric Co., Ltd., Takefu-city Fukui 915-8555 (JP)
(74) Representative: Paget, Hugh Charles Edward

(56) References cited:
- US-A- 5 796 709
- US-B1- 6 169 712
- PATENT ABSTRACTS OF JAPAN vol. 2003, no. 11, 5 November 2003 (2003-11-05) & JP 2003 217203 A (FUNAI ELECTRIC CO LTD), 31 July 2003 (2003-07-31)

## Description

### BACKGROUND OF THE INVENTION

### Field of the Invention

The present invention relates to a disk device that performs the playing and picture recording on an optical disk having a clamper on a board, in which the clamper supports a disk medium by sandwiching the disk medium between the clamper itself and the turntable.

### Description of the Related Art

In recent years, in response to various kinds of users' needs, a disk device has been built not only in a DVD player, a CD player, and the like, but also in the main body of a television receiver and the like, and its application has been extended to a wide range. Further, these electrical equipments and the like have become smaller and thinner year by year.

Because in the interior of such electrical equipments and the like having small design and thin design, the space is insufficient and various devices and parts are mounted at high densities, the workability tend to decrease in the installation and adjustment of devices and parts in the manufacturing process, during the maintenance, and in repair work of the devices and parts. Therefore, a disk device built in the electrical equipments and the like is required not only to meet the requirements for small design, but also to provide an easy installation and adjustment performed in the manufacturing process, an easy maintenance and repair work performed, and the safety during maintenance, repair work, and the like.

Japanese Patent Laid-Open Publication No. 2003-059154 discloses a disk device in which the requirements for an easy installation and adjustment are performed in the manufacturing process, an easy maintenance and repair work is performed, a reduction in the cost of products and the like are to be met by simplifying the structure of the device by reducing the number of parts, and the like.

Japanese Patent Laid-Open Publication No. 07-272474 discloses a conventional technique that enables the inspection of a disk device to be easily performed during the service check of the disk device, such as repair, and Japanese Patent Laid-Open Publication No. 10-334643 discloses a conventional technique that facilitates assembling during the manufacture of electrical equipments and the like. [INSERT page 2a]

### SUMMARY OF THE INVENTION

In the conventional device, during the service check such as repair, it is necessary to remove a disk device from an electrical equipment and the like and to expose the rear surface side of the disk device by tilting the disk device,
US-A-6169712 describes a disk device having a clamper for clamping disks between itself and a turntable. The clamper is rotatably held by a clamper support member fixed to a main chassis.
US-A-5796709 (cf. the preamble of claim 1) discloses a disk device having a clamper mounted in a frame and clamping a disk between itself and a turntable. A print wiring board controls the device. and the work must also be carried out by taking a peep into the disk device, with the disk device kept tilted. Thus, the work was very complicated.

Further, a frame that constitutes a disk device is usually formed by monolithic molding from resin and has substantially a box-like shape. However, the front portion of the frame must be opened in order to load and unload a disk medium and the top surface portion has only a support portion to support a clamper. Thus, structurally, the frame has many open parts and it could not be said that the strength of the frame is enough. Therefore, a conventional disk device had the problem that deformation and twisting may occur in the disk device when heat and an external force are applied, which was a fear, and that the disk device may not normally operate when deformation and twisting occur in the disk device. In recent years, electrical equipments have become smaller and thinner and against this background, parts and devices that generate heat is being provided in higher densities in the interior of electrical equipments. Therefore, the weight and heat of each part are applied in a concentrated manner and the above-described problem tends to become more remarkable.

The present invention has been devised in view of the above-described problems and the object of the invention is to provide a disk device having a clamper on a board that is excellent in strength, and providing an easy installation and adjustment performed in the manufacturing process, an easy maintenance and repair work performed, and the safety during repair and maintenance work, further achieving a cost reduction.

The disk device according to the invention is as set out in claim 1.

In this arrangement, because the clamper is held by the board, it is unnecessary to separately provide a mechanism to support the clamper.

Preferably a supporting hole that supports the clamper is provided in the board and that the clamper is provided in the supporting hole.

According to the above-described arrangement, the clamper can be supported by the board owing to a simple arrangement that the supporting hole is provided in the board.

Preferably a top end portion of either or both of side walls of the frame that constitutes the disk device is provided with one or multiple protrusions to fit into an attaching hole or holes provided in the board and a top end portion of either or both of side walls of the frame is provided with one or multiple screw holes to screw the board, whereby the board is attached to the disk device.

According to the above-described arrangement, by fitting the hole or holes for joining to the frame that is provided in the board to the protrusion provided on the top end portion of the side wall of the frame, the positioning of the board with respect to the disk device can be accurately performed and further by screwing, the board is firmly fixed to the frame.

Preferably laser light that is emitted by an optical pickup is covered by the board having the clamper.

According to the above-described arrangement, the laser light emitted by the optical pickup is shut off by the board and the outside of the disk device is prevented from being directly irradiated.

With the disk device of the invention, because the clamper is held by the board, it is unnecessary to provide a clamper supporting portion that supports the clamper in the top end portion of the frame that constitutes the disk device and it is possible to keep the top surface portion of the frame in an open condition. Therefore, the shape of a mold that molds the frame is simplified and a cost reduction can be achieved. Furthermore, because the top surface portion of the frame is in an open condition, when a traverse unit or the like is attached to the disk device in the manufacturing process of the disk device, the attaching work can be easily performed from above the disk device, hence workability is improved, and it is possible to give flexibility to work steps. In addition, during repair and maintenance work, the work can be done easily because the board is mounted on top of the disk device, and by removing the board, the clamper can also be simultaneously removed so that the top surface portion of the disk device comes to an open condition, with the result that the replacement of parts within the disk device can be easily performed without removing the main body of the disk device from an electrical equipment or the like in which the disk device is built-in. Thus, the work time can be substantially shortened.

In the embodiment in which a supporting hole that supports the clamper is provided in the board and the clamper is provided in the supporting hole, the clamper itself can be an existing clamper and construction can be realized only by a simple arrangement in which the supporting hole is provided in the board, thereby reducing the cost. In addition, compared to the clamper supporting portion monolithically formed with the frame, the work of attaching the clamper is easy.

In the embodiment in which a top end portion of either or both of side walls of the frame that constitutes the disk device is provided with one or multiple protrusions to fit into an attaching hole provided in the board having the clamper and a top end portion of either or both of side walls of the frame is provided with one or multiple screw holes to screw the board, whereby the board is attached to the disk device, the positioning of the board is accurately performed by fitting the hole for joining to the frame that is provided in the board having the clamper to the protrusion provided on the top end portion of the side wall of the frame. By further screwing, the board is firmly fixed to the frame. Hence, the disk device has an integrated arrangement of the frame and the board with few open portions, and therefore, strength is improved, with the result that it is possible to prevent malfunctions of the device due to deformation and twisting from occurring. Furthermore, because deformation and twisting are small, it is possible to minimize plays in moving parts and the like and the device can be miniaturized as much as possible. In addition, in some combinations of the protrusion to fit into the hole provided in the board and the screw hole to screw the board, it is also possible to ensure that a control board that can be easily attached by use of only one screw, and therefore, man-hours of work and cost can be reduced.

In the embodiment in which at least the irradiation range of laser light that is emitted by an optical pickup is covered by the board having the clamper, the laser light emitted by the optical pickup is shut off by the board and the outside of the disk device is prevented from being directly irradiated. Therefore, it is possible to effectively prevent an accident such that an operator looks at laser light straightly by mistake during inspection and repair work and the like. Further, because the optical pickup is covered by the board, an optical head of the pickup can be made dust-proof.

### BRIEF DESCRIPTION OF THE DRAWINGS

FIG. 1 is a perspective view of a disk device having a clamper on a board in Embodiment 1;
FIG. 2 is a plan view of a disk device having a clamper on a board in Embodiment 1;
FIG. 3 is a plan view of FIG. 1 without the board 12 of FIG. 2;
FIG. 4 is a partially exploded perspective view of a disk device having a clamper on a board in Embodiment 1;
FIG. 5 is a perspective view of a DVD player, which is an example of an electrical equipment provided with a disk device having a clamper on a board in Embodiment 1;
FIG. 6 is a perspective view that shows a conventional example of a disk device;
FIG. 7 is a plan view that shows a conventional example of a disk device.

### DETAILED DESCRIPTION OF THE PREFERRED EMBODIMENTS

Now, the preferred embodiment of the invention will be described below with reference to the drawings. Please note that the following embodiment is a mere example for embodying the invention and is not intended to limit the invention within the scope of the embodiment.

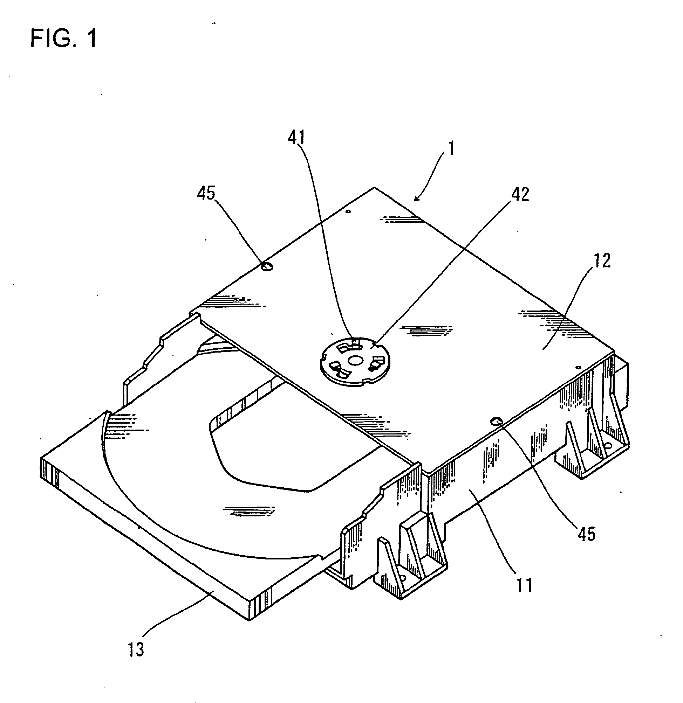

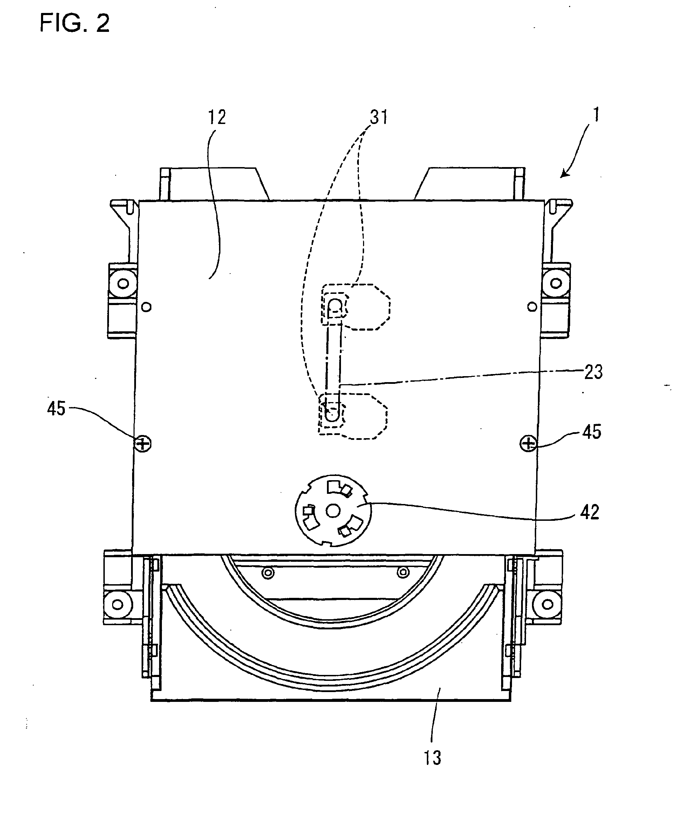

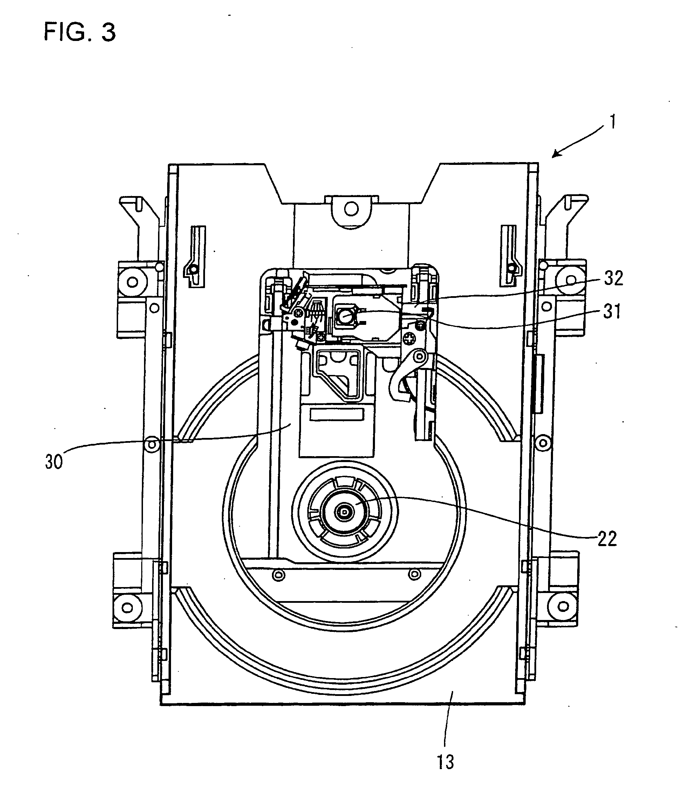

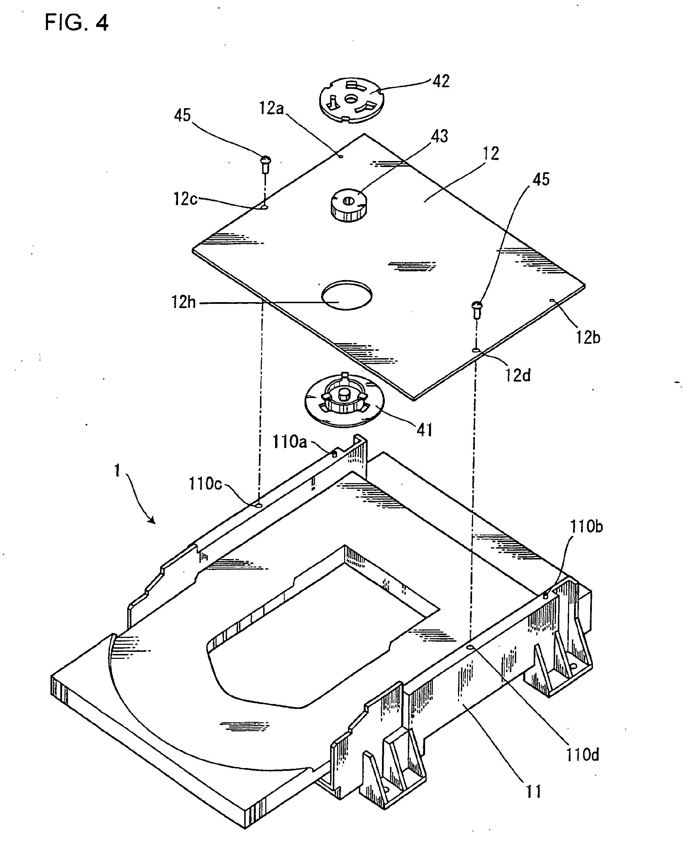

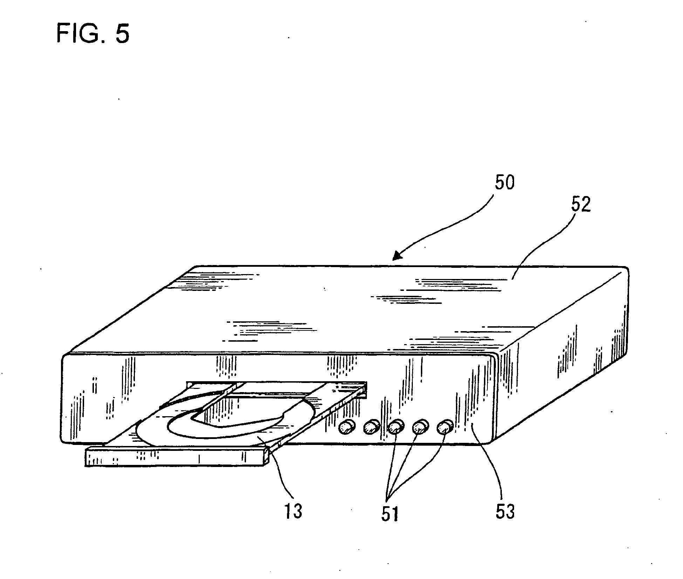

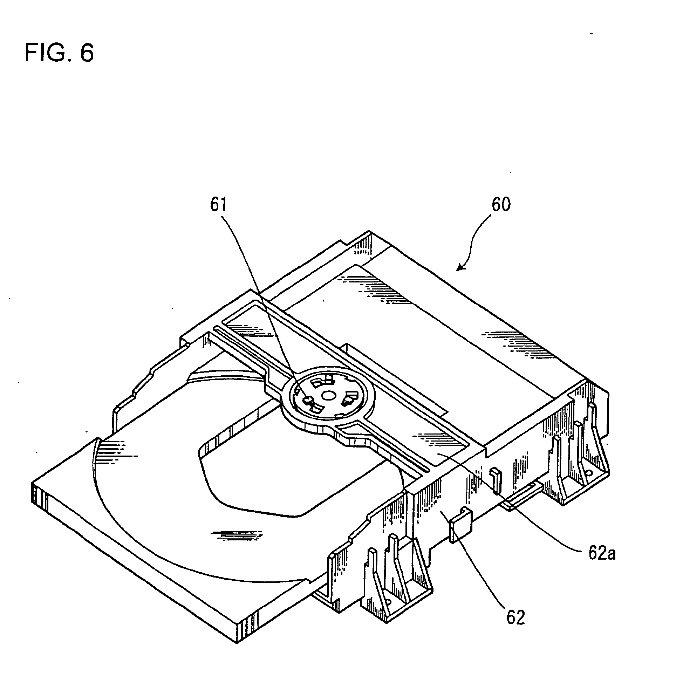

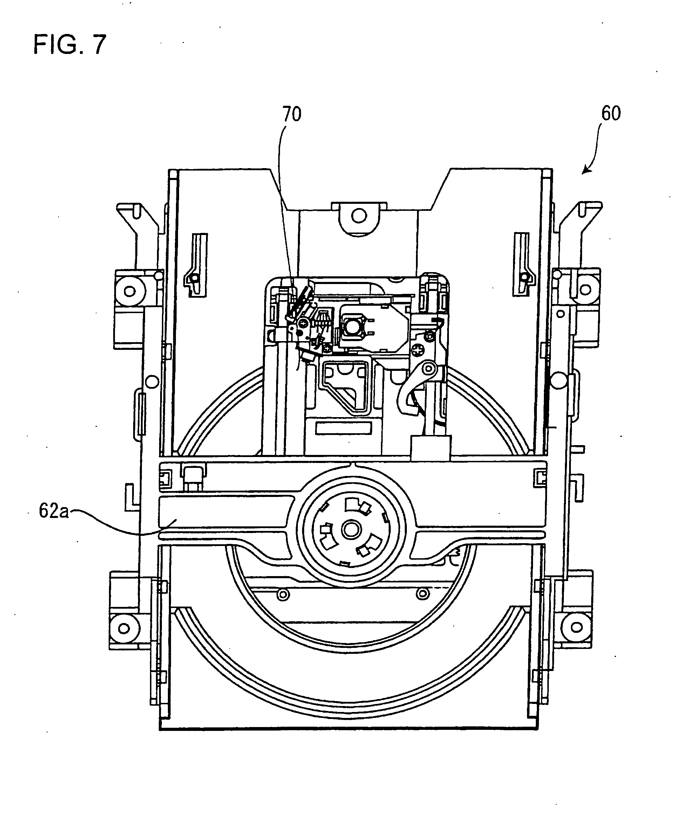

FIG. 1 is a perspective view of a disk device having a clamper on a board in this embodiment, FIG. 2 is a plan view of this disk device, and FIG. 3 is a plan view of this disk device without the board 12. FIG. 4 is a partially exploded perspective view of a disk device having a clamper on a board in this embodiment, and FIG. 5 is a perspective view of a DVD player, which is an example of an electrical equipment provided with a disk device having a clamper on a board in this embodiment. FIG. 6 is a perspective view that shows a conventional example of a disk device and FIG. 7 is a plan view of the disk device.

As shown in FIG. 1, in a disk device having a clamper on a board 1 (hereinafter referred to simply as a disk device 1), a board 12 is provided on top of a frame 11 the whole of which is generally made of resin, and a tray 13 on which a disk is to be placed is provided so as to be slidable with respect to the frame 11. As shown in FIGS. 2 and 3, the disk device 1 is provided with an optical pickup 31, an optical pickup feed mechanism 32, and the like, and a turntable 22 and under the turntable 22, a spindle motor (not shown) that rotates the turntable 22 and the like are provided. The board 12 in this embodiment is a board, e.g. a circuit board, that performs the control of the optical pickup feed mechanism 32, the spindle motor, and the like, the control of signals that are input/output to/from the optical pickup 31 and the like, and on the surface of the turntable 22 there is provided a magnetic material that supports a disk medium by sandwiching the disk medium between the magnetic material itself and a magnet 43 provided on a clamper 41.

As shown in FIG. 4, on the top end portions of both side walls of the frame 11, protrusions 110a, 110b to fit into attaching holes 12a, 12b provided in the board 12 are provided, and screw holes 110c, 110d to screw the control board 12 through the attaching holes 12c, 12d are provided. The clamper 41, on which the magnet 43 is placed, is loosely fitted in the board 12 by being inserted into the supporting hole 12h of the board 12 and covered with a clamper cover 42.

According to the above-described arrangement, the positioning of the board 12 with respect to the disk device 1 can be accurately performed by fitting the attaching holes 12a, 12b provided in the board 12 onto the protrusions 110a, 110b provided on the top end portions of the side walls of the frame, and at the same time, the board 12 can be firmly fixed to the frame 11 by screwing the board 12 by use of screws 45 through the attaching holes 12c, 12d. Hence, the disk device 1 has an integrated construction with the frame 11 and the board 12 with few open portions and, therefore, rigidity is high, with the result that it is possible to prevent malfunctions of the device due to deformation and twisting from occurring. Furthermore, because deformation and twisting are small, it is possible to minimize plays in moving parts and the like and the disk device 1 can be miniaturized as much as possible. As component parts, such as the clamper 41, the clamper cover 42, and the magnet 43, existing ones can be used as they are, and therefore, general versatility is high.

As shown in FIGS. 6 and 7, in a conventional disk device 60, a clamper supporting portion 62a that supports the clamper 61 are monolithically molded with a frame 62, and therefore, it could not be the that during the manufacturing of the disk device 60, the work of attaching the clamper 61 to the disk device 60 and the work of attaching a traverse unit 70 are good. Moreover, during repair and maintenance work, complicated work was required for the same reason.

On the other hand, according to the disk device 1 of this embodiment, as shown in FIGS. 3 and 4, the top surface of the disk device 1 is in an open condition when the board 12 is not yet attached to the disk device 1. Therefore, when the traverse unit 30, which is provided with the optical pickup 31, the pickup feed mechanism 32, the turntable 22, and the like, or the like is attached to the disk device 1 in the manufacturing process of the disk device 1, the work can be easily performed from above the disk device 1, hence workability is improved, and it is possible to give flexibility to work steps. Moreover, during repair and maintenance, the work is very easy because the board 12 is placed on top of the disk device 1. In addition, by removing the board 12, the top surface portion of the disk device 1 comes to an open condition, with the result that the replacement of parts provided within the disk device 1 can be easily performed without removing the main body of the disk device 1 from an electrical equipment (a chassis, for example, of a DVD player 50) in which the disk device 1 is built-in. Thus, the work steps and work time can be substantially shortened.

Furthermore, as shown in FIG. 2, the board 12 has an area that covers the irradiation range 23 of laser light emitted by the optical pickup 31, and therefore, it is possible to effectively prevent an accident such that an operator looks at laser light directly by mistake. The laser output is high particularly in recording type disk devices, which is dangerous. In recent years, the laser output has tended to increase further due to the doubling of the recording speed. Therefore, it is effective and necessary to ensure that the outside of the disk device is not directly irradiated by a laser in this manner. In addition, because the optical pickup 31 is covered by the board 12, the optical pickup 31 can be made dust-proof.

Although in this embodiment, descriptions were given of a tray type disk device, however, the invention is not limited to this type of disk device, and the invention can also be applied to a slot in type disk device in which a disk is inserted into the device by use of transfer rollers and a changer type disk device in which multiple disks can be housed within the device.

## Claims

1. A disk device (1) comprising a turntable (22) that rotates and drives a disk medium, a clamper (41) that supports the disk medium by sandwiching the disk medium between the clamper (41) itself and the turntable, a board (12) that controls the disk device, and a frame (11) in which these component parts are installed, **characterised in that** the board is a circuit board, the clamper (41) is provided on said circuit board (12) and the circuit board (12) is removably mounted on the frame (11) so as to be removable with the clamper (41) to permit access to the interior of the disk device.

2. The disk device (1) according to claim 1, in which a supporting hole (12h) that supports the clamper is provided in the board (12) and the clamper (41) is provided in the support hole (12h).

3. The disk device (1) according to claim 1 or 2, in which a top end portion of either or both of side walls of the frame (11) that constitutes the disk device (1) is provided with one or multiple protrusions (110a, 110b) to fit into an attaching hole or holes provided in the board (12) and a top end portion of either or both of side walls of the frame is provided with one or multiple screw holes (110c, 110d) to screw the board, whereby the board (12) is attached to the disk device.

4. The disk device according to any one of claims 1 to 3, in which the laser light that is emitted by an optical pickup (31) is covered by the board having the clamper.

## Patentansprüche

1. Plattenvorrichtung (1), umfassend einen Plattenteller (22), welcher sich dreht und ein Plattenmedium antreibt, eine Klemmvorrichtung (41), die das Plattenmedium durch Zwischenschichten des Plattenmediums zwischen die Klemmvorrichtung (41) selbst und den Plattenteller hält, eine Platte (12), die die Plattenvorrichtung steuert, und einen Rahmen (11), in dem diese Bestandteile eingebaut sind, **dadurch gekennzeichnet, dass** die Platte eine Leiterplatte ist, dass die Klemmvorrichtung (41) auf der Leiterplatte (12) bereitgestellt ist und dass die Leiterplatte (12) auf dem Rahmen (11) entfernbar angebracht ist, um mit der Klemmvorrichtung (41) entfernbar zu sein, um den Zugriff ins Innere der Plattenvorrichtung zu ermöglichen.

2. Plattenvorrichtung (1) nach Anspruch 1, worin ein Halteloch (12h), das die Klemmvorrichtung hält, in der Platte (12) bereitgestellt ist und die Klemmvorrichtung (41) im Halteloch (12h) bereitgestellt ist.

3. Plattenvorrichtung (1) nach Anspruch 1 oder 2, worin ein oberer Endabschnitt einer oder beider Seitenwände des Rahmens (11), der die Plattenvorrichtung (1) bildet, mit einem oder mehreren Vorsprüngen (110a, 110b) bereitgestellt ist, um in ein Anbringungsloch oder -löcher zu passen, die in der Platte (12) bereitgestellt sind, und ein oberer Endabschnitt einer oder beider Seitenwände des Rahmen mit einem oder mehreren Schraublöchern (110c, 110d) bereitgestellt ist, um die Platte zu verschrauben, wodurch die Platte (12) an der Plattenvorrichtung angebracht ist.

4. Plattenvorrichtung nach einem der Ansprüche 1 bis 3, worin das Laserlicht, das durch eine optische Aufnahmevorrichtung (31) emittiert wird, durch die Platte, welche die Klemmvorrichtung aufweist, abgedeckt ist.

## Revendications

1. Dispositif de disque (1) comprenant un plateau tournant (22) qui tourne et entraîne un support de disque, un organe de serrage (41) qui supporte le support de disque en prenant en sandwich le support de disque entre l'organe de serrage (41) lui-même et le plateau tournant, un tableau (12) qui commande le dispositif de disque, et un châssis (11) dans lequel ces composants sont installés, **caractérisé en ce que** le tableau est une carte imprimée, l'organe de serrage (41) est prévu sur ladite carte imprimée (12), et la carte imprimée (12) est montée amoviblement sur le châssis (11) pour pouvoir être retirée avec l'organe de serrage (41) afin de permettre l'accès à l'intérieur du dispositif de disque.

2. Dispositif de disque (1) selon la revendication 1, dans lequel un trou de support (12h) qui supporte l'élément de serrage, est réalisé dans la carte (12), et l'organe de serrage (41) est prévu dans le trou de support (12h).

3. Dispositif de disque (1) selon la revendication 1 ou 2, dans lequel une portion d'extrémité supérieure d'une quelconque ou des deux parois latérales du châssis (11) qui constitue le dispositif de disque (1) présente une ou de multiples saillies (110a, 110b) pour s'insérer dans un ou des trous de fixation ménagés dans la carte (12), et une portion d'extrémité supérieure d'une quelconque ou des deux parois latérales du châssis présente un ou de multiples trous de vis (110c, 110d) pour le vissage de la carte, par quoi la carte (12) est fixée au dispositif de disque.

4. Dispositif de disque selon l'une des revendications 1 à 3, dans lequel la lumière laser qui est émise par un tourne-disque optique (31) est couverte par la carte ayant l'organe de serrage.
